# EUROPÄISCHE PATENTANMELDUNG

(11) **EP 4 826 573 A1**
(43) Veröffentlichungstag der Anmeldung: **21.10.2026**
(21) Anmeldenummer: 25170389.8
(22) Anmeldetag: 14.04.2025
(51) Int. Cl.: G06F 18/214, G06V 10/25, G06V 10/774

(54) **VERFAHREN ZUR ERZEUGUNG EINES TRAININGSDATENSATZ FÜR EIN TRAINING EINES KÜNSTLICHEN NEURONALEN NETZES, VERFAHREN ZUM TRAINING DES KÜNSTLICHEN NEURONALEN NETZES, VORRICHTUNG UND COMPUTERPROGRAMMPRODUKT**

(71) Anmelder: Siemens Aktiengesellschaft, 80333 München (DE)
(72) Erfinder: Bischoff, Martin, 85653 Aying, Großhelfendorf (DE); Röhrl, Verena, 85301 Schweitenkirchen (DE); Raab, Martin, 90584 Allersberg (DE); Reh, Jörg, 91096 Möhrendorf (DE)
(74) Vertreter: Siemens Patent Attorneys

(57) **Zusammenfassung**

Es wird ein Verfahren zur Erzeugung eines Trainingsdatensatz für ein Training eines künstlichen neuronalen Netzes vorgeschlagen, umfassend folgende Schritte:
- Bereitstellen eines ersten Abbilds;
- Bereitstellen eines ersten Parameters, wobei der erste Parameter mit dem ersten Abbild assoziiert wird;
- Bereitstellen wenigstens eines zweiten Abbilds als einen Ausschnitt aus dem ersten Abbild, wobei der Ausschnitt durch eine elementweise Aufteilung des ersten Abbilds ermittelt wird;
- Erzeugen des Trainingsdatensatzes, wobei der Trainingsdatensatz wenigstens das zweite Abbild und den zugehörigen ersten Parameter umfasst.

Weiterhin betrifft die Erfindung ein Verfahren zum Training eines künstlichen neuronalen Netzes, eine Vorrichtung und ein Computerprogrammprodukt.

## Beschreibung

Die Erfindung betrifft ein Verfahren gemäß dem Oberbegriff des Patentanspruches 1 sowie ein Verfahren gemäß dem Oberbegriff des Patentanspruches 9, eine Vorrichtung gemäß dem Oberbegriff des Patentanspruches 10 und ein Computerprogrammprodukt gemäß dem Oberbegriff des Patentanspruches 14.

Der vorliegenden Erfindung liegt die Aufgabe zugrunde, eine Produktionsmaschine effizienter zu steuern.

Die Aufgabe wird durch ein Verfahren mit den Merkmalen des unabhängigen Patentanspruches 1, durch ein Verfahren mit den Merkmalen des unabhängigen Patentanspruches 9, durch eine Vorrichtung mit den Merkmalen des unabhängigen Patentanspruches 10, sowie durch ein Computerprogrammprodukt mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zur Erzeugung eines Trainingsdatensatz für ein Training eines künstlichen neuronalen Netzes, umfasst folgende Schritte:
- Bereitstellen eines ersten Abbilds;
- Bereitstellen eines ersten Parameters, wobei der erste Parameter mit dem ersten Abbild assoziiert wird;
- Bereitstellen wenigstens eines zweiten Abbilds als einen Ausschnitt aus dem ersten Abbild, wobei der Ausschnitt durch eine elementweise Aufteilung des ersten Abbilds ermittelt wird;
- Erzeugen des Trainingsdatensatzes, wobei der Trainingsdatensatz wenigstens das zweite Abbild und den zugehörigen ersten Parameter umfasst,
dadurch gekennzeichnet, dass
die elementweise Aufteilung des ersten Abbilds schrittweise erfolgt, wobei ein Bildbereich mit fester Höhe und Breite pixelweise und/oder pixelgruppenweise und/oder zeilenweise und/oder spaltenweise mit den Pixeln des ersten Abbilds überlagert wird und der im jeweiligen Schritt überlagerte Bereich als Ausschnitt bereitgestellt wird, wobei für den Ausschnitt jeweils:
   - eine Homogenität, insbesondere der pixelweisen Farbwerte, ermittelt wird und/oder;
   - eine Farbintensität, insbesondere eine mittlere Summe der normierten Summen aller der RGB-Werte, ermittelt wird und/oder;
   - eine Kantendetektion durchgeführt wird, insbesondere um eine Stärke der Kanten zu ermitteln,
wobei die schrittweise bereitgestellten Ausschnitte abhängig von der ermittelten Homogenität und/oder Farbintensität und/oder einem Vorhandensein von Kanten als zweite Abbilder ausgewählt und für das Erzeugen des Trainingsdatensatzes verwendet werden.

Der Trainingsdatensatz kann neben dem zweiten Abbild und dem zugehörigen ersten Parameter, weitere Parameter umfassen, wobei der erste und/oder die weiteren Parameter eine mit dem zweiten Abbild assoziierte Oberflächentemperatur, insbesondere zum Zeitpunkt eines Produktionsschrittes, umfassen können. Weiterhin können als Parameter Zählerstande genutzt werden, welche angeben wie oft der Produktionsschritt bereits erfolgt ist.

Das künstliche neuronale Netz kann als Architekturen Long Short-Term Memory (LSTM), Gated Recurrent Unit (GRU) nutzen oder ein Multi-Layer-Perzeptron (MLP) oder ein Transformer-Modell sein.

Die Abbilder können Datenstrukturen, insbesondere Arrays und/oder Tabellen, sein.

Die Farbintensität kann eine Reinheit oder eine Stärke einer Farbe beschreiben. Mit anderen Worten kann die Farbintensität angeben, wie stark eine Farbe von einem reinen Grauwert abweicht. Je höher eine Sättigung, desto reiner und kräftiger erscheint die Farbe. Am Beispiel einer RGB-Farbkodierung eines Bildpunktes kann die Farbintensität wie in folgender Formel berechnet werden: $S = \frac{MAX - MIN}{MAX}$

MAX ist der maximale Wert eines RGB-Farbpunkts, MIN ist der minimale Wert eines RGB-Farbpunkts und S liegt im Bereich [0,1], wobei S = 0 ein unbunter Grauwert ist und S = 1 eine maximale Farbsättigung abbildet.

Die Katendetektion kann Verfahren umfassen, welche Erkennung von signifikanten Intensitätsänderungen in Bildern bereitstellen. Eine Kante kann dabei mathematisch, als eine lokale Diskontinuität der Bildfunktion definiert werden. Ein Verfahren für die Kantendetektion ist der Canny-Algorithmus.

Die Homogenität kann ein Texturmaß sein, insbesondere für die gleichmäßige Verteilung von Farbwerten und/oder Farbintensitäten von Bildpunkten.

Durch die vorliegende Erfindung wird das Verfahren zur vorteilhaften Bereitstellung des Trainingsdatensatz für das Training des künstlichen neuronalen Netzes beschrieben. Das ist deshalb der Fall, weil der erfindungsgemäß bereitgestellte Trainingsdatensatz auf eine Aufnahm von ganzen ersten Abbildern verzichten kann und nur kleinere zweite Abbilder aufnehmen kann. Darüber hinaus werden nur zweite Abbilder in den Trainingsdatensatz aufgenommen, welche den Kriterien Homogenität und/oder Farbintensität und/oder Vorhandensein von Kanten entsprechen. Dadurch können hochelektiv Teile des jeweiligen Abbilds in den Trainingsdatensatz aufgenommen werden, sodass der Trainingsdatensatz vorteilhafterweise ein effizienteres Training des künstlichen neuronalen Netzes ermöglicht.

Das erfindungsgemäße Verfahren zum Training des künstlichen neuronalen Netzes, dadurch gekennzeichnet, dass das künstliche neuronale Netz mit dem Trainingsdatensatz trainiert wird.

Das Training kann mittels eines Verfahrens des Supervised Learnings bereitgestellt werden.

Es ergeben sich zum erfindungsgemäßen Verfahren zur Erzeugung von Trainingsdaten gleichartige, gleichwertige und gleichwirkende Vorteile.

Die erfindungsgemäße Vorrichtung, umfasst eine Produktionsmaschine, eine Recheneinheit, eine Steuerungseinheit und/oder eine Erfassungseinheit, wobei die Erfassungseinheit dazu ausgebildet ist, ein erstes Abbild zu erfassen und der Recheneinheit bereitzustellen,
dadurch gekennzeichnet, dass,
- die Recheneinheit ein künstliches neuronales Netz umfasst, wobei das künstliche neuronale Netz dazu ausgebildet ist, als einen Eingangswert wenigstens ein erstes Abbild zu verwenden und als einen Ausgangswert einen zweiten Parameter bereitzustellen; und
- die Steuerungseinheit dazu ausgebildet ist, eine Steuergröße, in Abhängigkeit des ermittelten zweiten Parameters zu steuern.

Die Produktionsmaschine kann eine Druckmaschine und/oder eine Fördertechnik sein.

Die Recheneinheit kann ein industrieller Computer und/oder ein Edge-Gerät sein oder eine virtuelle Recheneinheit in einer Cloud sein.

Die Steuerungseinheit kann eine speicherprogrammbierbare Steuerung sein.

Die Erfassungseinheit kann eine optische Kamera und/oder ein Ultraschallsensor und/oder Laserscanner, insbesondere nach einem Prinzip von Time-of-Flight (ToF) oder Light-Detectionand-Ranging (Lidar) sein.

Es ergeben sich zum erfindungsgemäßen Verfahren zur Erzeugung von Trainingsdaten gleichartige, gleichwertige und gleichwirkende Vorteile.

Das erfindungsgemäße Computerprogrammprodukt, umfasst Befehle, die bei der Ausführung des Programms durch eine Recheneinheit, insbesondere einen Computer, diesen veranlassen, ein Verfahren und/oder Schritte des Verfahrens gemäß einem der Ansprüche 1 bis 9 auszuführen.

Es ergeben sich zum erfindungsgemäßen Verfahren zur Erzeugung von Trainingsdaten gleichartige, gleichwertige und gleichwirkende Vorteile.

Gemäß einer vorteilhaften Ausgestaltung der Erfindung erfolgt die elementweise Aufteilung des ersten Abbilds durch eine Aufteilung in quadratische Ausschnitte, wobei die quadratischen Ausschnitte als zweite Abbilder bereitgestellt werden.

Dadurch ist es vorteilhafterweise möglich, die Ausschnitte noch schneller bereitzustellen, da die Aufteilung in wenigeren Schritten erfolgt, insbesondere in weniger Schritten als bei der pixelweisen Aufteilung.

In einer vorteilhaften Weiterbildung der Erfindung werden die zweiten Abbilder in einer Pixelauflösung von 224 x 224 bis 227x227 bereitgestellt.

Die Pixelauflösung kann die Anzahl der Bildpunkte (Pixel) eines digitalen Bildes in horizontaler und vertikaler Richtung beschreiben.

Dadurch können vorteilhafterweise künstliche neuronale Netz, welche bereits mit Abbildern in diesen Pixelauflösungen trainiert wurden mit dem bereitgestellten Trainingsdaten effizient weiter trainiert werden.

Gemäß einer vorteilhaften Ausgestaltung der Erfindung werden bei der Auswahl von zweiten Abbildern aus den ermittelten Ausschnitten, die Ausschnitte mit der höchsten Farbintensität und/oder mit der größten Homogenität und/oder mit der größten Anzahl von Kanten, abhängig von wenigstens einem Schwellenwert ausgewählt und für das Erzeugen des Trainingsdatensatzes verwendet.

Dadurch ist es vorteilhafterweise möglich einen Schwellenwert festzulegen, wobei der Schwellenwert anpassbar sein kann, um auf sich ändernde Parameter zu reagieren.

In einer vorteilhaften Weiterbildung der Erfindung werden Ausschnitte die wenigstens Teile von Motiven, welche insbesondere Logos und/oder Symbole und/oder Überschriften enthalten, als zweite Abbilder ausgewählt und für das Erzeugen des Trainingsdatensatzes verwendet.

Motive, Symbole, Logos oder Überschriften können aus Sicht der Bildverarbeitung wiederkehrende Muster und/oder Bildeigenschaften darstellen.

Dadurch kann vorteilhafterweise eine Erkennung wiederkehrender Muster, als eine Stärke der Bildverarbeitung genutzt werden. Mit anderen Worten wird ein Wissen um wiederkehrende Muster genutzt um, insbesondere ein Re-training zu vereinfachen. Das ist deshalb der Fall, weil bestimmte Abbilder trotz ihrer Unterschiede, eben diese Muster gemeinsam haben. Ein Training auf diese Gemeinsamkeiten kann daher ein Re-Training des künstlichen Neuronalen Netzes vorteilhafterweise vereinfachen oder eine unmittelbare Weiterverwendung des vorhandenen Netzes vorteilhafterweise ermöglichen.

Gemäß einer vorteilhaften Ausgestaltung der Erfindung werden die schrittweise bereitgestellten Ausschnitte mittels einer Qualitätszahl, welche abhängig ist von der ermittelten Homogenität und/oder Farbintensität und/oder einem Vorhandensein von Kanten als zweite Abbilder, ausgewählt und für das Erzeugen des Trainingsdatensatzes verwendet.

Die Qualitätszahl kann einen Schwellenwert abbilden, bei dessen Über- oder Unterschreitung die Auswahl des Abbildes erfolgen kann. Für eine Einbeziehung der verschiedenen Metriken (Homogenität, Farbintensität und Vorhandensein von Kanten) kann die Qualitätszahl eine Gewichtete Summe sein.

Die gewichtete Summe kann durch eine Variation der Gewichte die einzelnen Metriken unterschiedlich stark gewichten.

Dadurch ist es vorteilhafterweise möglich, mittels einer Variation der Gewichte, insbesondere mittels einer dynamischen Variation, auf Änderungen von Parametern zu reagieren. Das ist besonders vorteilhaft, wenn eine gleichbleibende Qualität im Betrieb der Produktionsmaschine erzielt werden soll.

In einer vorteilhaften Weiterbildung der Erfindung umfasst der Trainingsdatensatz eine Positionsangabe für das zweite Abbild, wobei die Positionsangabe sich auf eine Position innerhalb des ersten Abbilds bezieht, wobei die Positionsangabe insbesondere zeilenweise und/oder spaltenweise bereitgestellt wird.

Die Positionsangabe kann angeben, wo das zweite Abbild innerhalb des ersten Abbilds lokalisiert ist. Weiterhin kann die Positionsangabe relativ zu einer Position einer Kamera angegeben sein, sodass eine Kamera abhängig von der Positionsangabe ausgerichtet werden kann.

Dadurch können vorteilhafterweise bei einer Erfassung des ersten Abbilds nur ausgewählte Bereiche, abhängig von der Positionsangabe, erfasst werden und damit ein Datenaufkommen vorteilhafterweise verringert. Das ist deshalb der Fall, weil durch die Positionsangabe übrige Bereiche von der Erfassung ausgeschlossen werden können.

Gemäß einer vorteilhaften Ausgestaltung der Erfindung ist der erste Parameter ein Anpressdruckwert.

Der Anpressdruckwert kann den Anpressdruck einer Druckplatte und/oder eines Druckstempels, insbesondere für Druckmaschinen und/oder Pressen abbilden.

Dadurch ist es vorteilhafterweise möglich mechatronische Vorrichtungen, die einen variablen Druck ausüben können, effizienter zu steuern.

In einer vorteilhaften Weiterbildung der Erfindung stellt die Recheneinheit einen Datensatz bereit, welcher durch das künstliche neuronale Netz verarbeitbare Objektmerkmale und deren Position verknüpft, wobei die Erfassungseinheit abhängig von dieser jeweiligen Position mittels der Recheneinheit ausrichtbar ist, sodass die Erfassungseinheit beim Erfassen eines ersten Abbilds das korrespondierende Objektmerkmal im ersten Abbild erfasst.

Objektmerkmale können sich durch bestimmte Metriken (Homogenität, Farbintensität und Vorhandensein von Kanten) auszeichnen. Objektmerkmalen kann die Position zugeordnet werden, diese kann relativ zur Erfassungseinheit und/oder einem übergeordneten Bezugssystem, insbesondere einen umgebenden Raum (Raum, Halle oder Gebäude) sein.

Die Ausrichtbarkeit der Erfassungseinheit kann dadurch ausgebildet sein, dass die Erfassungseinheit durch die Recheneinheit und abhängig von der Position im Datensatz ausgerichtet wird. Eine einmalige Ausrichtung der Erfassungseinheit, sodass alle laut Datensatz möglichen Positionen erfassbar sind ist ebenfalls eine mögliche Ausbildung.

Dadurch kann vorteilhafterweise die Erfassung des ersten Abbilds mit geringeren Datenaufkommen bereitgestellt werden. Das ist deshalb der Fall, weil bevorzugt Areale mit Objektmerkmalen erfasst werden können.

Gemäß einer vorteilhaften Ausgestaltung der Erfindung stellt die Recheneinheit einen Datensatz bereit, welcher durch das künstliche neuronale Netz verarbeitbare Objektmerkmale und deren Position im zu erfassenden ersten Abbild verknüpft, sodass die Erfassungseinheit nur Areale mit im Datensatz vorliegenden Objektmerkmalen für das erste Abbild erfasst.

Dadurch ist es vorteilhafterweise möglich das Datenaufkommen bei der Erfassung des ersten Abbilds zu verringern. Das ist deshalb der Fall weil die Recheneinheit mittels eines virtuellen Ausschneidens Areale ohne Objektmerkmale ausschneidet und nur Areale mit im Datensatz vorliegenden Objektmerkmalen für das erste Abbild erfasst.

In einer vorteilhaften Weiterbildung der Erfindung ist die Produktionsmaschine als eine Druckvorrichtung ausgebildet, wobei der zweite Parameter ein Anpressdruckwert ist und die Steuergröße als ein Anpressdruck ausgebildet ist, welcher abhängig vom Anpressdruckwert steuerbar ist.

Die Druckvorrichtung kann eine Druckmaschine für Printerzeugnisse sein.

Dadurch kann vorteilhafterweise die effizientere Steuerung der Druckmaschine bereitgestellt werden.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: zeigt eine Datenpipeline als ein Blockdiagramm, umfassend ein Erzeugen von Trainingsdaten, das Training eines künstlichen neuronalen Netzes mit den Trainingsdaten und die Verwendung des künstlichen neuronalen Netzes für ein Steuern einer Steuergröße; und
- Figur 2: zeigt eine Vorrichtung als Blockdiagramm, umfassend eine Produktionsmaschine, eine Recheneinheit, eine Steuerungseinheit und eine Erfassungseinheit.

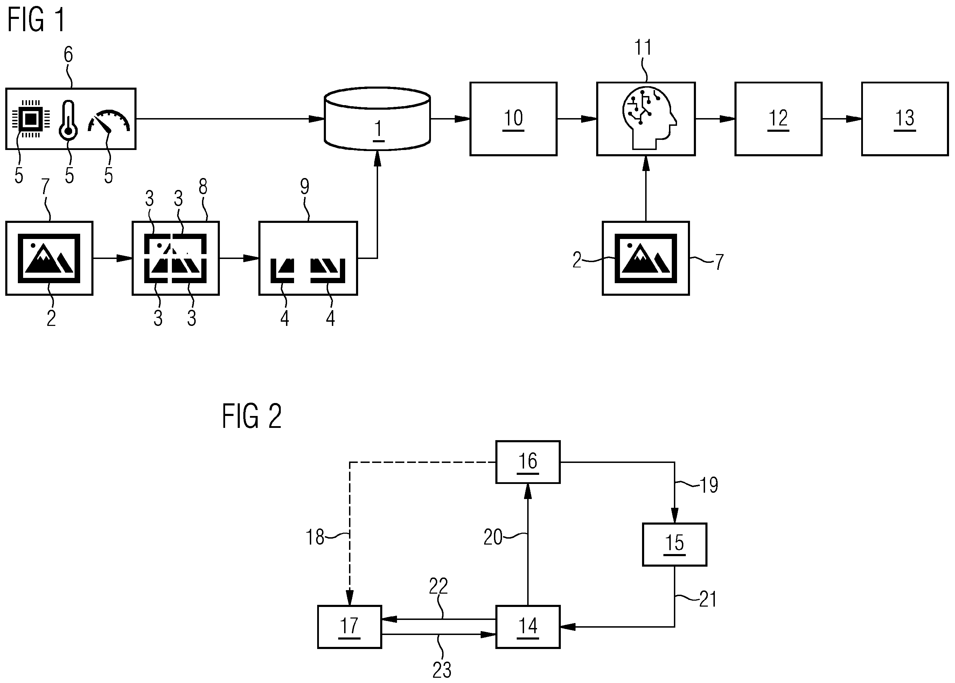

Figur 1 zeigt eine schematische Darstellung einer Datenpipeline als ein Ausführungsbeispiel in Form eines Blockdiagramms. Ein Kernstück der Datenpipeline ist der Trainingsdatensatz 1, wobei für diesen Daten bereitgestellt 6,9 werden und der Trainingsdatensatz 1 für ein Training 10 eines künstlichen neuronalen Netzes weiterverwendet wird.

Das Bereitstellen von Daten erfolgt durch zwei unterschiedliche Bereitstellungen, nämlich einem Bereitstellen 5 eines ersten Parameter 6 und einem Bereitstellen 7 eines ersten Abbilds 2.

Das Bereitstellen 5 des ersten Parameter 6, kann sensorische Daten wie Druck, Temperatur, Geschwindigkeit, Drehzahl etc. umfassen. Eine weitere Möglichkeit ist das Bereitstellen von Projektierungsdaten einer Maschine, insbesondere Typennummern und/oder ein Datum einer letzten Wartung.

Das Bereitstellen 7 des ersten Abbilds 2 kann mittels einer Erfassungseinheit, insbesondere einer optischen Kamera, erfolgen.

Eine elementweise Aufteilung 8 des ersten Abbilds 2 kann, dadurch erfolgen das ein Bildbereich mit fester Höhe und Breite pixelweise und/oder pixelgruppenweise und/oder zeilenweise und/oder spaltenweise mit den Pixeln des ersten Abbilds 2 überlagert wird und der im jeweiligen Schritt überlagerte Bereich als Ausschnitt 3 bereitgestellt wird.

Die Ausschnitte 3 werden mittels wenigstens einer der folgenden Metriken als zweite Abbilder 4 ausgewählt:
1. Homogenität: Eine Gleichmäßigkeit einer Verteilung von Farbwerten und/oder Farbintensitäten von Bildpunkten wird ermittelt.
2. Farbintensität: Eine Stärke/Reinheit der Farben wird bildpunktweise ermittelt, insbesondere eine mittlere Summe der normierten Summen der RGB-Werte der Bildpunkte.
3. Vorhandensein von Kanten: Mittels eines Kantendetektionsalgorithmus wie dem Canny-Algorithmus, können Kanten aus dem Ausschnitt extrahiert werden. Anschließend kann die Anzahl der Kanten und/oder die Länge der Kanten ermittelt werden.

Für ein Bereitstellen 9 zweiter Abbilder 4, erfolgt eine Auswahl von geeigneten Ausschnitten 3. Die Auswahl kann durch eine Auswertelogik erfolgen, wobei die Metriken einzeln gegenüber einem jeweiligen Schwellenwert verglichen werden und je nach Überschreitung oder Unterschreitung ausgewählt oder nicht ausgewählt werden. Weitere logische Verknüpfungen sind möglich, bei denen insbesondere nur eine Metrik, wenigstens eine Metrik oder alle Metriken erfüllt, insbesondere Schwellwerte überschritten, sein müssen. Alternativ kann ein einzelner Schwellenwert, insbesondere als eine Qualitätszahl, genutzt werden, welche mit einem Ergebnis einer gewichteten Summenbildung als allen drei Metriken ermittelt wird. Hierbei wird für jede Metrik ein Wert berechnet, mit einem festgelegten Gewicht gewichtet und alle Metriken summiert. Das Ergebnis ist eine gewichtete Summe, die mit einem Schwellenwert abgleichbar ist und als Ergebnis wird der jeweilige Ausschnitt als ein zweites Abbild bereitgestellt.

Der Trainingsdatensatz 1 wird auf Basis der beiden Bereitstellungen 6,9 erzeugt. Hierbei werden die ersten Parameter 5 mit wenigstens einem zweiten Abbild 4 verknüpft, wodurch diese dann miteinander assoziiert sind. Diese selbe Assoziation besteht zwischen dem ersten Parameter 5 und dem ersten Abbild 2, wobei die Assoziation auf das zweite Abbild 4 übergeht. Mit Assoziation kann verstanden werden, dass ein erster Parameter 5 zu einem ähnlichen Zeitpunkt wie das erste Abbild 2 erfasst wurde und/oder eine Steuerung, insbesondere einer Maschine, mittels des ersten Parameter 5 zu einem Ergebnis führt, welches in Abbild 2 erfasst wurde.

Das Training 10 des künstlichen neuronalen Netzes kann mittels des Trainingsdatensatzes 1 und der Methode des Supervised-Learnings erfolgen. Das Training 10 kann ein Re-Training sein, wobei ein bereits trainiertes künstliches neuronales Netz weitertrainiert wird. Ein Re-Training zielt darauf ab das künstliche neuronale Netz für einen neuen spezifischen Einsatzfall nachzutrainieren. Vorteilhafterweise ist das Re-Training weniger zeit- und/oder kostenintensiv als ein vollständiges Training eines neuen künstlichen neuronalen Netzes.

Die Inferenz 11 mittels des künstlichen neuronalen Netzes erfolgt dadurch, dass als ein Eingangswert das erste Abbild 2 bereitgestellt wird, wobei das erste Abbild 2 nicht das gleiche erste Abbild 2 aus dem Trainingsdatensatz sein muss. Viel mehr kann es sich um ein weiteres erstes Abbild 2 mit ähnlichen Merkmalen, insbesondere mit ähnlichen Metriken, handeln. Als einen Ausgangswert stellt das künstliche neuronale Netz einen zweiten Parameter bereit 12.

Der bereitgestellte zweite Parameter 12 kann gemäß dem Ausführungsbeispiel für das Steuern 13 der Steuergröße verwendet werden.

Ein Beispiel für ein solches Steuern 13 wäre das Steuern eines Anpressdruckes einer Druckmaschine in Abhängigkeit zum zweiten Parameter der insbesondere ein Anpressdruckwert als eine Sollgröße sein kann.

Ein weiteres Beispiel für ein solches Steuern 13 wäre das Steuern einer Temperatur und/oder eine Backzeit eines Backautomaten in Abhängigkeit zum zweiten Parameter der insbesondere ein Temperaturwert und/oder ein Backzeitwert als Sollgröße sein kann.

Figur 2 zeigt schematisch ein Blockdiagramm welches die Datenflüsse zwischen einer Steuerungseinheit 14, einer Erfassungseinheit 16, einer Produktionsmaschine 17 und einer Recheneinheit 15 wiedergibt.

Die Steuerungseinheit 14 kann periodisch und/oder abhängig von der Erfassung des ersten Parameters mittels des Datenflusses 23 die Erfassung 18 des ersten Abbildes mit dem Datenfluss 20 auslösen. Wenn die Erfassungseinheit 16 eine Kameraeinheit ist, kann diese, auf durch die Produktionsmaschine 17 durchlaufende Produkte ausgerichtet sein. Wenn die Erfassungseinheit 16 ein erstes Abbild erfasst hat, stellt sie das erste Abbild mittels des Datenflusses 19 der Recheneinheit 15 bereit.

Die Recheneinheit 15 ist gemäß dem Ausführungsbeispiel dazu ausgebildet das künstliche neuronale Netz bereitzustellen und dem selbigen, ersten Abbilder als Eingangswerte zuzuführen. Durch Inferenz 11 stellt das künstliche neuronale Netz dann den zweiten Parameter bereit 21 für die Steuerungseinheit 14.

Die Steuerungseinheit 14 ist gemäß dem Ausführungsbeispiel für das Steuern 22 der Steuergröße mittels des zweiten Parameters ausgebildet. Das Steuern 22 kann über eine Anbindung an die Produktionsmaschine 17 über gängige Kommunikationsprotokolle, insbesondere Modbus, CAN-Bus, OPC-UA, MQTT etc. erfolgen.

Gleichartige, gleichwertige oder gleichwirkende Elemente können in einer der Figuren oder in den Figuren mit denselben Bezugszeichen versehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Trainingsdatensatz
- 2: Erstes Abbild
- 3: Ausschnitt
- 4: Zweite Abbilder
- 5: Erster Parameter
- 6: Bereitstellen des ersten Parameters
- 7: Bereitstellen des ersten Abbilds
- 8: Elementweise Aufteilung des ersten Abbilds
- 9: Bereitstellen der zweiten Abbilder
- 10: Training eines künstlichen neuronalen Netzes
- 11: Inferenz mittels des künstlichen neuronalen Netzes
- 12: bereitstellen eines zweiten Parameters
- 13: Steuern einer Steuergröße mittels des zweiten Parameters
- 14: Steuerungseinheit
- 15: Recheneinheit
- 16: Erfassungseinheit
- 17: Produktionsmaschine
- 18: Erfassen des ersten Abbilds
- 19: Bereitstellen eines zweiten Abbilds
- 20: Auslösen einer Erfassung
- 21: Bereitstellen eines zweiten Parameters
- 22: Steuern einer Steuerungsgröße mittel des zweiten Parameters
- 23: Bereitstellen des ersten Parameters

## Patentansprüche

1. Verfahren zur Erzeugung eines Trainingsdatensatz für ein Training eines künstlichen neuronalen Netzes, umfassend folgende Schritte:
- Bereitstellen eines ersten Abbilds;
- Bereitstellen eines ersten Parameters, wobei der erste Parameter mit dem ersten Abbild assoziiert wird;
- Bereitstellen wenigstens eines zweiten Abbilds als einen Ausschnitt aus dem ersten Abbild, wobei der Ausschnitt durch eine elementweise Aufteilung des ersten Abbilds ermittelt wird;
- Erzeugen des Trainingsdatensatzes, wobei der Trainingsdatensatz wenigstens das zweite Abbild und den zugehörigen ersten Parameter umfasst,
**dadurch gekennzeichnet, dass**
die elementweise Aufteilung des ersten Abbilds schrittweise erfolgt, wobei ein Bildbereich mit fester Höhe und Breite pixelweise und/oder pixelgruppenweise und/oder zeilenweise und/oder spaltenweise mit den Pixeln des ersten Abbilds überlagert wird und der im jeweiligen Schritt überlagerte Bereich als Ausschnitt bereitgestellt wird, wobei für den Ausschnitt jeweils:
- eine Homogenität, insbesondere der pixelweisen Farbwerte, ermittelt wird und/oder;
- eine Farbintensität, insbesondere eine mittlere Summe der normierten Summen aller der RGB-Werte, ermittelt wird und/oder;
- eine Kantendetektion durchgeführt wird, insbesondere um eine Stärke der Kanten zu ermitteln,
wobei die schrittweise bereitgestellten Ausschnitte abhängig von der ermittelten Homogenität und/oder Farbintensität und/oder einem Vorhandensein von Kanten als zweite Abbilder ausgewählt und für das Erzeugen des Trainingsdatensatzes verwendet werden.

2. Verfahren gemäß Anspruch 1, **dadurch gekennzeichnet, dass** die elementweise Aufteilung des ersten Abbilds durch eine Aufteilung in quadratische Ausschnitte erfolgt, wobei die quadratischen Ausschnitte als zweite Abbilder bereitgestellt werden.

3. Verfahren gemäß einem der vorhergehenden Ansprüche, **dadurch gekennzeichnet, dass** die zweiten Abbilder in einer Pixelauflösung von 224x224 bis 227x227 bereitgestellt werden.

4. Verfahren gemäß einem der vorhergehenden Ansprüche, **dadurch gekennzeichnet, dass** bei der Auswahl von zweiten Abbildern aus den ermittelten Ausschnitten, die Ausschnitte mit der höchsten Farbintensität und/oder mit der größten Homogenität und/oder mit der größten Anzahl von Kanten, abhängig von wenigstens einem Schwellenwert ausgewählt und für das Erzeugen des Trainingsdatensatzes verwendet werden.

5. Verfahren gemäß einem der vorhergehenden Ansprüche, **dadurch gekennzeichnet, dass** Ausschnitte die wenigstens Teile von Motiven, welche insbesondere Logos und/oder Symbole und/oder Überschriften enthalten, als zweite Abbilder ausgewählt und für das Erzeugen des Trainingsdatensatzes verwendet werden.

6. Verfahren gemäß einem der vorhergehenden Ansprüche, **dadurch gekennzeichnet, dass** die schrittweise bereitgestellten Ausschnitte mittels einer Qualitätszahl, welche abhängig ist von der ermittelten Homogenität und/oder Farbintensität und/oder einem Vorhandensein von Kanten als zweite Abbilder, ausgewählt und für das Erzeugen des Trainingsdatensatzes verwendet werden.

7. Verfahren gemäß einem der vorhergehenden Ansprüche, **dadurch gekennzeichnet, dass** der Trainingsdatensatz eine Positionsangabe für das zweite Abbild umfasst, wobei die Positionsangabe sich auf eine Position innerhalb des ersten Abbilds bezieht, wobei die Positionsangabe insbesondere zeilenweise und/oder spaltenweise bereitgestellt wird.

8. Verfahren gemäß einem der vorhergehenden Ansprüche, **dadurch gekennzeichnet, dass** der erste Parameter ein Anpressdruckwert ist.

9. Verfahren zum Training eines künstlichen neuronalen Netzes, **dadurch gekennzeichnet, dass** das künstliche neuronale Netz mit dem Trainingsdatensatz gemäß einem der vorhergehenden Ansprüche trainiert wird.

10. Vorrichtung, umfassend eine Produktionsmaschine, eine Recheneinheit, eine Steuerungseinheit und/oder eine Erfassungseinheit, wobei die Erfassungseinheit dazu ausgebildet ist, ein erstes Abbild zu erfassen und der Recheneinheit bereitzustellen,
**dadurch gekennzeichnet, dass**,
- die Recheneinheit ein künstliches neuronales Netz umfasst, wobei das künstliche neuronale Netz dazu ausgebildet ist, als einen Eingangswert wenigstens ein erstes Abbild zu verwenden und als einen Ausgangswert einen zweiten Parameter bereitzustellen; und
- die Steuerungseinheit dazu ausgebildet ist, eine Steuergröße, in Abhängigkeit des ermittelten zweiten Parameters zu steuern.

11. Vorrichtung gemäß Anspruch 10, **dadurch gekennzeichnet, dass** die Recheneinheit einen Datensatz bereitstellt, welcher durch das künstliche neuronale Netz verarbeitbare Objektmerkmale und deren Position verknüpft, wobei die Erfassungseinheit abhängig von dieser jeweiligen Position mittels der Recheneinheit ausrichtbar ist, sodass die Erfassungseinheit beim Erfassen eines ersten Abbilds das korrespondierende Objektmerkmal im ersten Abbild erfasst.

12. Vorrichtung gemäß der Ansprüche 10 oder 11, **dadurch gekennzeichnet, dass** die Recheneinheit einen Datensatz bereitstellt, welcher durch das künstliche neuronale Netz verarbeitbare Objektmerkmale und deren Position im zu erfassenden ersten Abbild verknüpft, sodass die Erfassungseinheit nur Areale mit im Datensatz vorliegenden Objektmerkmalen für das erste Abbild erfasst.

13. Vorrichtung gemäß der Ansprüche 10 bis 12, **dadurch gekennzeichnet, dass** die Produktionsmaschine als eine Druckvorrichtung ausgebildet ist, wobei der zweite Parameter ein Anpressdruckwert ist und die Steuergröße als ein Anpressdruck ausgebildet ist, welcher abhängig vom Anpressdruckwert steuerbar ist.

14. Computerprogrammprodukt, umfassend Befehle, die bei der Ausführung des Programms durch eine Recheneinheit, insbesondere einen Computer, diesen veranlassen, ein Verfahren und/oder Schritte des Verfahrens gemäß einem der Ansprüche 1 bis 9 auszuführen.
